# EUROPEAN PATENT SPECIFICATION

(11) **EP 1 336 788 B1**
(45) Date of publication and mention of the grant of the patent: **10.11.2004**
(21) Application number: 03002661.1
(22) Date of filing: 11.02.2003
(51) Int. Cl.: F16K 31/42

(54) **Four-way switching valve**
Vierweg Schaltventil
Soupape de commutation à quatre voies

(30) Priority: 14.02.2002 JP 2002036561
(43) Date of publication of application: 20.08.2003
(73) Proprietor: TGK CO., Ltd., Tokyo 193-0942 (JP)
(72) Inventor: Hirota, Hisatoshi, c/o TGK Co., Ltd., Hachioji-shi, Tokyo 193-0942 (JP)
(74) Representative: Grünecker, Kinkeldey, Stockmair & Schwanhäusser Anwaltssozietät

(56) References cited:
- EP-A- 0 927 846
- EP-A- 1 061 314
- US-A- 4 469 134
- US-A- 4 976 286
- PATENT ABSTRACTS OF JAPAN vol. 1996, no. 12, 26 December 1996 (1996-12-26) & JP 08 219308 A (TGK CO LTD), 30 August 1996 (1996-08-30)
- PATENT ABSTRACTS OF JAPAN vol. 1997, no. 01, 31 January 1997 (1997-01-31) & JP 08 226730 A (TGK CO LTD), 3 September 1996 (1996-09-03)
- PATENT ABSTRACTS OF JAPAN vol. 2003, no. 04, 2 April 2003 (2003-04-02) & JP 2002 372160 A (TGK CO LTD), 26 December 2002 (2002-12-26)

## Description

This invention relates to a four-way switching valve according to the preamble of claim 1, 13 or 17, particularly to a four-way switching valve for switching refrigerant lines between cooling and heating operation modes, e.g. in a heat pump-type heating and cooling system for an automotive vehicle. A valve of this type is known from the document EP 0927846.

In an automotive vehicle, a refrigeration cycle is employed for the cooling operation. For heating engine coolant is used as a heat source. Recently efficiency improved combustion engines do not provide sufficient coolant heating capacity in winter. For this reason, a heat pump system is used for both cooling and heating. In such systems, it is necessary to reverse the flow direction of the refrigerant flowing through indoor and outdoor heat exchangers, as the system is switched between cooling and heating. This is done by a four-way switching valve.

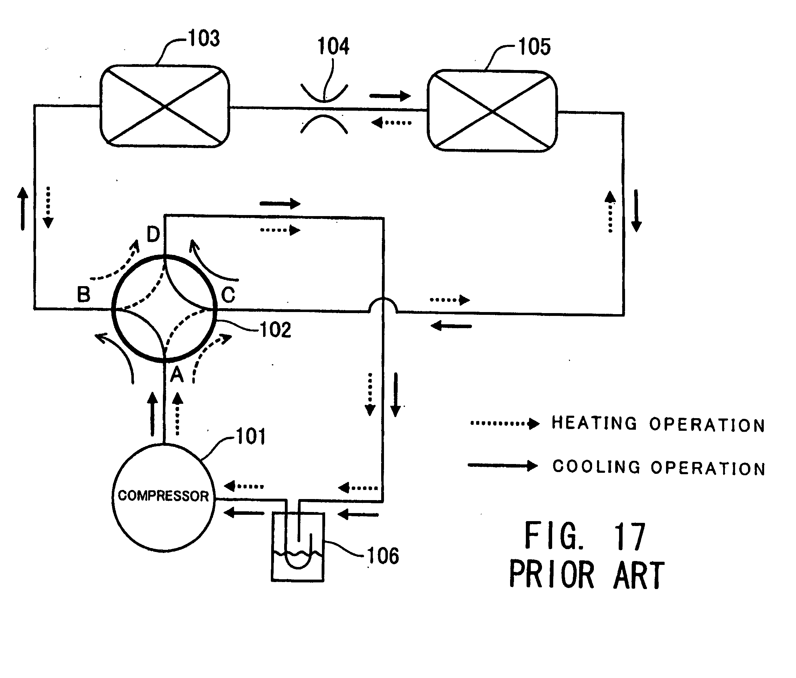

Fig. 17 is a block diagram of a known heating and cooling system using a four-way switching valve 102. The heating and cooling system comprises a compressor 101, the four-way switching valve 102, an outdoor heat exchanger 103, a pressure-reducing device 104, an indoor heat exchanger 105, and an accumulator 106. The four-way switching valve 102 has four ports A to D. The port A is connected to the compressor 101, the port B is connected to the outdoor heat exchanger 103, the port C is connected to the indoor heat exchanger 105, and the port D is connected to the accumulator 106.

During cooling operation, the four-way switching valve 102 connects ports A and B and ports C and D, as indicated by solid lines in Fig. 17. Therefore, high-temperature and high-pressure refrigerant compressed by the compressor 101 flows into port A and is sent from port B to the outdoor heat exchanger 103, where the refrigerant is caused to undergo heat exchange and condensation, and then is adiabatically expanded to a low-temperature and low-pressure refrigerant by the pressure-reducing device 104. The indoor heat exchanger 105 causes the low-temperature and low-pressure refrigerant to exchange heat with warm air in the compartment and to evaporate. Then, the refrigerant flows from port C to port D and to the accumulator 106, where the refrigerant is separated into gas and liquid, followed by returning to the compressor 101.

During the heating operation, the four-way switching valve 102 connects ports A and C and ports B and D as indicated by broken lines. Then, the high-temperature and high-pressure refrigerant compressed by the compressor 101 flows from port A via port C, to the indoor heat exchanger 105, where it exchanges heat with cool air in the compartment to heat the same. The refrigerant condensed by the indoor heat exchanger 105 is adiabatically expanded to low-temperature and low-pressure refrigerant by the pressure-reducing device 104. Then, the refrigerant undergoes heat exchange at the outdoor heat exchanger 103 to evaporate, and flows from the port B to port D into the accumulator 106, where the refrigerant is separated into gas and liquid.

This four-way switching valve 102 is known from JP 2001-183291 A and is configured such that a first valve and a third valve for opening and closing passages from a port A into which a high-pressure refrigerant is introduced, to a port B or a port C, and a second valve and a fourth valve for opening and closing passages from the port B or the port C to a low-pressure port D are provided separate and independent in the valve body, and that the first valve and the second valve, and the third valve and the fourth valve are actuated by first and second pistons, respectively. Two solenoid valves are provided for selectively guiding high-pressure refrigerant from port A to pressure chambers for actuating the first and second pistons.

The two solenoid valves guide the high-pressure fluid from the port A into the respective pressure chamber for the first or second piston to switch between a first state connecting ports A, and B, and ports C and D, and a second state connecting ports A and C, and ports B and D. Due to the design of the known four-way switching valve two sets of three-way switching valves are arranged in parallel with each other within a large-sized body. Due to necessity of machining two sets of valve elements, and cylinders for the pistons driving the valve elements, the manufacturing costs are increased.

It is an object of the present invention to provide a four-way switching valve which is compact in size and which is inexpensive. The valve design also should provide a reliable valve element seating without defective sealing and should avoid direct flow connections between high and low pressure connections when the valve state is switched.

Said objects are achieved with the features of claim 1, 13 or 17.

In this four-way switching valve the first and second three-way switching valves, and the piston are coaxially arranged within the hollow cylindrical body. This makes the design of the valve simple and compact in size. The body is prepared only by uniaxial machining This reduces the manufacturing costs. Further, the valve elements of the first and second three-way switching valves are configured such that they are prevented from being seated simultaneously. To the contrary, they produce a cushioning function of accommodating a distance over which one of the valve elements seated earlier moves to allow the other one to be seated subsequently, by springs or resilient sealing members. Both valve elements reliably are seated. This eliminates the possibilities of a defective sealing due to machining inaccuracy, production and assembly tolerances and thermal expansion influences. When the four-way switching valve switches between the first and second states, the provided guides restrict the travelling ranges of the valve elements and close all valve holes prior to seating of the respective valve element. Therefore, the first port under high pressure and the fourth port under low pressure are prevented from being simultaneously communicated with each other, whereby the high pressure at the first port and the low pressure at the fourth port can be maintained.

Embodiments of the present invention, e.g. for a heat pump-type heating and cooling system for an automotive vehicle, will be described with reference to drawings. In the drawings is:
- Fig. 1: a longitudinal sectional view of a first embodiment of a four-way switching valve, in a switching position with the solenoid OFF,
- Fig. 2: a longitudinal sectional view of the first embodiment with the solenoid ON,
- Fig. 3: a sectional view of a second embodiment of a four-way switching valve (solenoid OFF),
- Fig. 4: a sectional view of a third embodiment of the four-way switching valve (solenoid OFF),
- Fig. 5: the third embodiment in a switching position with the solenoid ON,
- Fig. 6: a sectional view of a fourth embodiment of the four-way switching valve (solenoid OFF),
- Fig. 7: a fourth embodiment in a switching position (solenoid ON),
- Fig. 8: a sectional view of a fifth embodiment of the four-way switching valve (solenoid OFF),
- Fig. 9: a sectional view of a sixth embodiment of the four-way switching valve in a first switching position,
- Fig. 10: the sixth embodiment in a second switching position,
- Fig. 11: a sectional view of a seventh embodiment of the four-way switching valve (solenoid OFF),
- Fig. 12: the seventh embodiment in a switching position with the solenoid ON,
- Fig. 13: a section view of an eight embodiment of the four-way switching valve (solenoid OFF),
- Fig. 14: a sectional view of a ninth embodiment of the four-way switching valve (solenoid OFF),
- Fig. 15: the ninth embodiment in a switching position with the solenoid ON,
- Fig. 16: a section view of a tenth embodiment of the four-way switching valve (solenoid OFF), and
- Fig. 17: an arrangement of a heating and cooling system using a four-way switching valve.

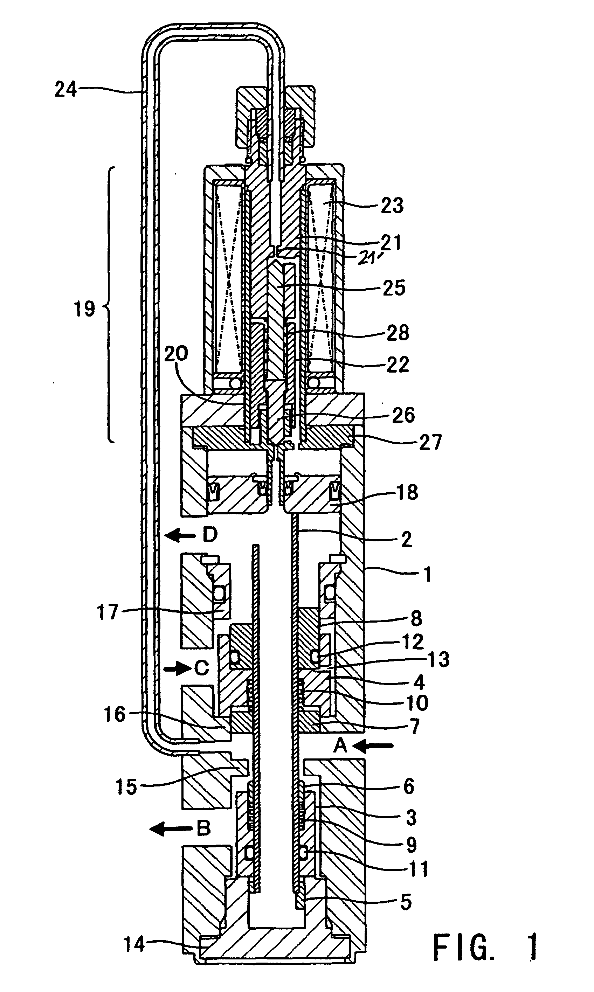

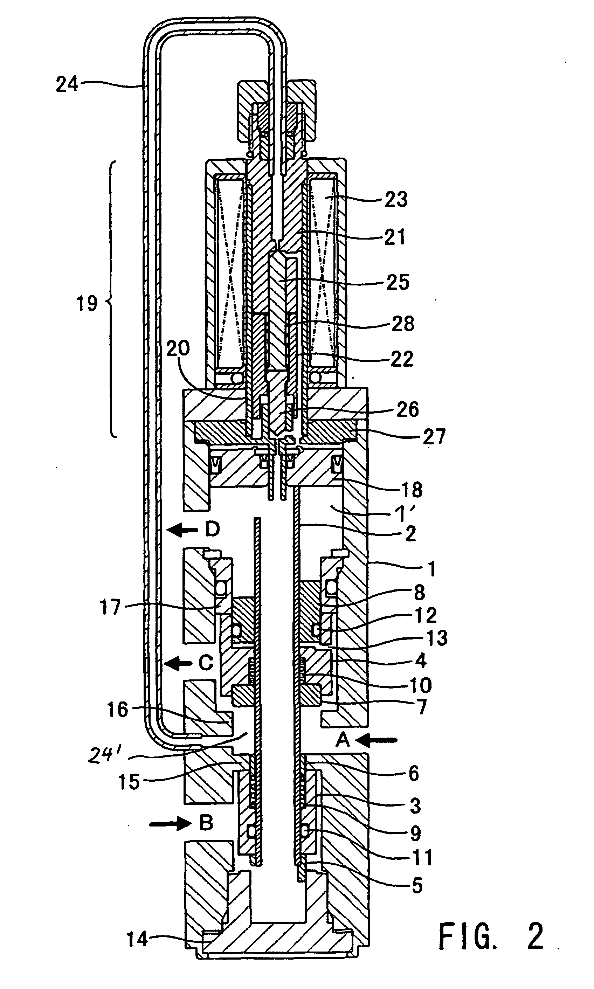

The four-way switching valve in Figs. 1, 2 has four ports A, B, C, and D in the periphery of a hollow, substantially cylindrical body 1. In a heat pump-type heating and cooling system, port A is connected to piping for receiving a high-pressure refrigerant delivered from a compressor, port B is connected to piping which leads to an external heat exchanger, port C is connected to piping which leads to an internal heat exchanger, and port D is connected to low-pressure refrigerant piping which leads to the suction side of the compressor.

Along a longitudinal central axis of the body 1 a cylinder is formed in which a hollow sleeve 2 defining a driving rod is axially movable. The sleeve 2 defines a central low-pressure side refrigerant passage. Two separate ring-shaped valve elements 3, 4 are axially slidably arranged on the sleeve 2. The sleeve 2 is guided in annular guides 5, 6, 7, 8. The guides are secured to the sleeve 2 for limiting the travelling ranges of the valve elements 3 and 4. Between the valve elements 3, 4 and the guides 6, 7 springs 9 and 10 are provided for urging the valve elements 3 and 4 toward the guides 5 and 8, respectively. An O-ring 11 is arranged between the sleeve 2 and the valve element 3. The valve element 4 has recesses formed at upper and lower ends thereof, and is arranged such it partially overlaps the guides 7, 8, with an O-ring 12 arranged in-between. The valve element 4 has an orifice 13 for introducing pressure to a valve element surface via which the valve element 4 may axially abut at the guide 8.

The body 1 has a lower open end closed by a cap 14. A recess is formed in the cap 14 defining a guide surface for axially guiding the lowest guide 5 on the sleeve 2. An annular end face of the recess of the cap 14 forms a lower valve seat for the valve element 3. Above the valve element 3, an annular projection or ring flange 15 is formed in the body 1 as an upper valve seat for the valve element 3. Below the valve element 4, an annular projection or ring flange 16 is formed in the body 1 as a lower valve seat for the valve element 4. Above the valve element 4, a fixed guide 17 is firmly fitted in the body 1 to provide an upper low-pressure side valve seat for the valve element 4.

The valve element 4, the guide 7, and the valve hole of the ring flange 16 into which the guide 7 is loosely inserted have larger sizes than the valve element 3, the guide 6, and the valve hole of the ring flange 15 into which the guide 6 may be loosely inserted, respectively, such that the pressure-receiving area of the valve element 4 is larger than the pressure-receiving area of the valve element 3. When the valve elements 3 and 4 receive high pressure from port A, an upwardly-pushing force acts on the valve elements 3, 4 and the sleeve 2.

The guides 5, 6, 7, 8 on the sleeve 2 are arranged in such positions that they enter their respective associated valve holes (cap recess, ring flanges 15, 16, guide 17) earlier than the valve elements 3 and 4 abut at their seats. This prevents that the ports A, B, C, D are simultaneously communicated with each other when the four-way switching valve switches. This prevents high-pressure refrigerant from directly flowing to the low-pressure side during the switching, so that pressures on the high-pressure side and the low-pressure side are maintained. This also allows to smoothly switch between the cooling operation and the heating operation, without pressure losses.

Above sleeve 2 a piston 18 is axially slidably arranged in the interior chamber of the body 1. A space on the upper side of piston 18 forms a pressure chamber for high pressure to push the piston 18 downward.

The valve element 3 is part of a three-way switching valve in the body 1 connecting port B either with port A or port D. The valve element 4 is part of a three-way switching valve connecting port C either with port A or port D.

To perform respective switching operations, a three-way solenoid valve 19 is arranged at a top end of the body 1. There a fixed core 21 closes the upper end of a sleeve 20, in which a plunger 22 is axially movable. A solenoid coil 23 is arranged outside the sleeve 20. A refrigerant passage extends axially through the core 21. An annular projection or ring flange 21' (a valve seat) is integrally formed in core 21 at an intermediate location of the refrigerant passage. The refrigerant passage is connected at an upper end via a tube 24 with a high-pressure space 24' in body 1 communicating with port A. A valve element needle 25 is axially movably arranged in core 21 below the valve seat. The plunger 22 contains an axially movable valve element needle 26. The needle 26 has a lower pointed end opposed to a valve seat formed in a cap or disc 27 closing the opening at the top of the body 1. The valve seat is formed at an intermediate location of a passage communicating the pressure chamber on the upper side of the piston 18 and a space on the lower side thereof connected to port D. A lower end of the sleeve 20 is fitted into the cap 27, thereby forming a passage communicating between the inside of the sleeve 20 and the pressure chamber of the piston 18.

The core 21 and the plunger 22 have longitudinal peripheral grooves. The groove in the core 21 communicates with the space on the lower side of the annular projection or valve seat within the core 21. A spring 28 is interposed between the needle 25 and the core 21, for urging the plunger 22 and the needles 25, 26 in a downward direction. When the coil 23 is not energized, the needle 25 clears the associated valve seat, while the needle 26 is seated on the associated valve seat.

With the solenoid OFF (Fig. 1), the plunger 22 is urged downward by the spring 28. The needle 25 clears its valve seat. The high-pressure chamber 24' communicating with the port A is connected via the tube 24 and the three-way solenoid valve 19 to the pressure chamber on the upper side of the piston 18. The needle 26 seated on its valve seat cuts off communication between the pressure chamber on the upper side of the piston 18 and the low-pressure chamber 1' communicating with port D.

The high-pressure refrigerant supplied to port A is introduced into the pressure chamber on the upper side of the piston 18 via the tube 24 and the three-way solenoid valve 19 to push the piston 18 down. The piston 18 pushes the sleeve 2 down. The valve element 3 is seated on the end face valve seat of the cap 14. The valve element 4 is seated on the valve seat at the annular projection 16. The high pressure from port A acts on the valve element 3 in a valve-seating direction, positively intensifying the sealing between the passages having the highest and the lowest pressures.

Port A is connected with port B. Port C is connected with port D. The heating and cooling system for the automotive vehicle is adjusted to a cooling operation mode. The high-pressure refrigerant delivered from the compressor and received at port A flows from port B to the external heat exchanger. The refrigerant from the internal heat exchanger and received at port C flows from port D to the compressor.

Immediately after the solenoid is ON (Fig. 2), the plunger 22 is attracted to the core 21. The needles 25, 26 move upward until the needle 25 is seated on its valve seat to block introduction of high pressure from port A. The needle 26 clears its valve seat to establish communication between the pressure chamber on the upper side of the piston 18 and the low-pressure chamber 1' at port D. This deprives the piston 18 of the force pushing down the sleeve 2. At this time, the guide 7 receives the high pressure at the bottom surface, while the guide 8 receives low pressure at the top surface. The sleeve 2 is pushed upward. When the sleeve 2 starts to move upward, first, the guide 6 dives into the annular projection 15 to block the valve hole between ports A and B. Similarly, the guide 8 dives into the central hole of the guide 17 to block the valve hole between port C and D. When these guides 6, 8 start to dive in, the other guide 5 still remains fitted in the cap 14 to close the communication between the ports B and D. The guide 7 dives into the annular projection 16 and closes communication between the ports A and C. Then, all the ports A, B, C, D are separated from each other.

When the sleeve 2 further moves upward, the guide 5 is moved upward together with the valve element 3 until the valve element 3 leaves the cap 14, and is then further moved upward to connect the ports B and D when the guide 5 is removed from the cap 14. On the other hand, the guide 7 causes the valve element 4 to move upward and to leave the annular projection 16. At the time point the guide 7 is moved out of the annular projection 16, the guide 8 now receives the high pressure via the orifice 13 to move upward. This upward motion is stopped when the valve element 4 is seated on the guide 17, to place the four-way switching valve in the state shown in Fig. 2. This connects ports A and C. At the same time, the valve element 4 is pushed upward by the guide 7 due to the high pressure acting on the guide 8 in an upward direction. This positively intensifies the sealing effect. It should be noted that in this state, even after the valve element 4 is seated, the sleeve 2 still may attempt to move upward due to the high pressure acting on the guide 8 by leaving the valve element 4 at the guide 17. This upward motion is stopped when the valve element 3 is seated on the annular projection 15. The difference between the respective traveling distances is accommodated by the spring 10. Thus, the valve elements 3, 4 are individually seated, but not simultaneously, and are cushioned by the springs 9, 10, respectively. This eliminates the possibility that one of the valve elements 3, 4 develops a defective sealing effect due to machining tolerances, assembly tolerance of component parts, etc.

The heating and cooling system is switched to the heating operation mode. The high-pressure refrigerant received at port A flows from port C to the internal heat exchanger, and the refrigerant delivered from the external heat exchanger and received at port B flows from port D to the compressor.

In switching the operation mode, the three-way solenoid valve 19 either leads the high-pressure refrigerant into the pressure chamber on the upper side of the piston 18, thereby pushing the valve elements 3, 4 down, or connects the pressure chamber on the upper side of the piston 18 with port D to reduce the pressure in the chamber. Since the pressure-receiving areas of the guides 7, 8 are larger than that of the guide 6, the guide 8 is caused to push the valve elements 3, 4 upward.

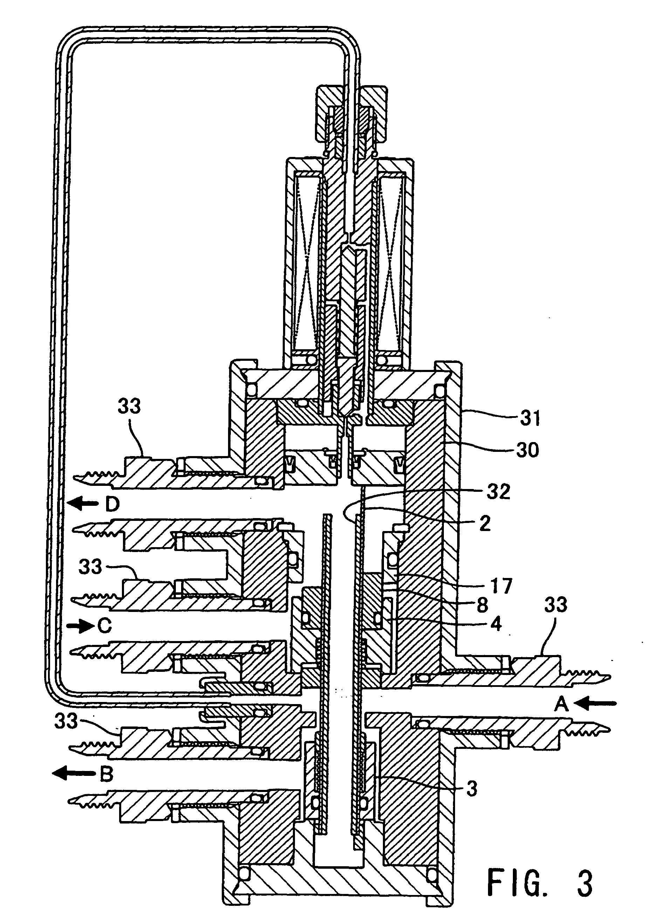

The second embodiment of Fig. 3 has substantially the same internal structure as the first embodiment, and operates in the same way, but has a different external body structure, namely, a heat resistant resin body 30 and a metal body 31 covering the outside of the resin body 30. When carbon dioxide, for example, is used as the refrigerant in the heating and cooling system for the automotive vehicle, the maximum refrigerant temperature may rise to approximately 170 °C. As the resin, polyphenylene sulfide which is resistant to even higher temperatures is used. The resin body 30 suppresses heat conduction, and hence heat loss within the four-way switching valve. The outer metal body 31, assures the necessary pressure-resistance.

Preferably, also the valve elements 3, 4 and the guide 17 are made form a resin. The sleeve 2 has its inner peripheral surface covered with a resin lining 32. Joints 33 for connecting pipes of refrigerant piping are screwed to the metal body 31.

It should be noted that although, in the second embodiment, the valve element 4 has no particularly formed orifice for introducing pressure to the surface via which the valve element 4 abuts at the surface of the guide 8, instead a clearance may be provided between the sleeve 2 and the valve element 4 to achieve the function of the orifice 13.

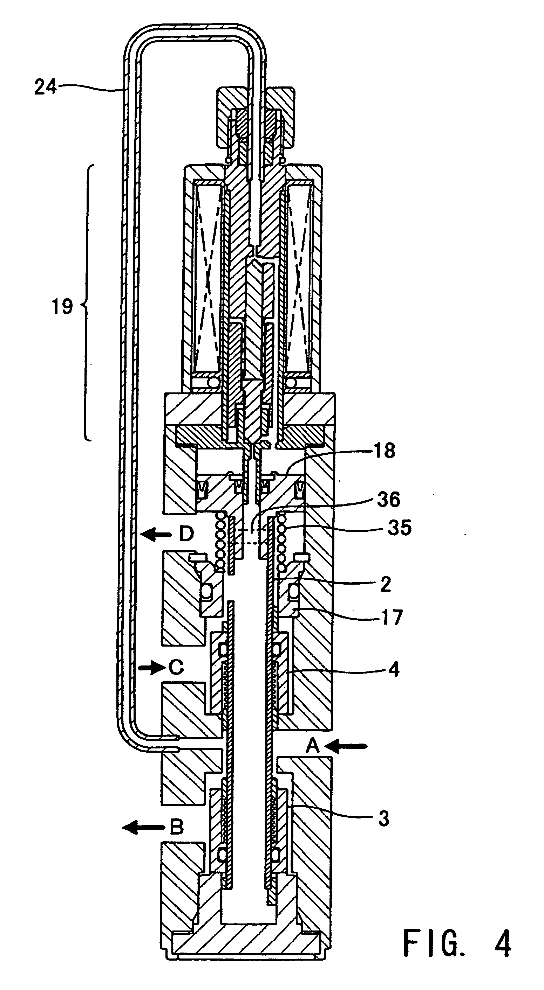

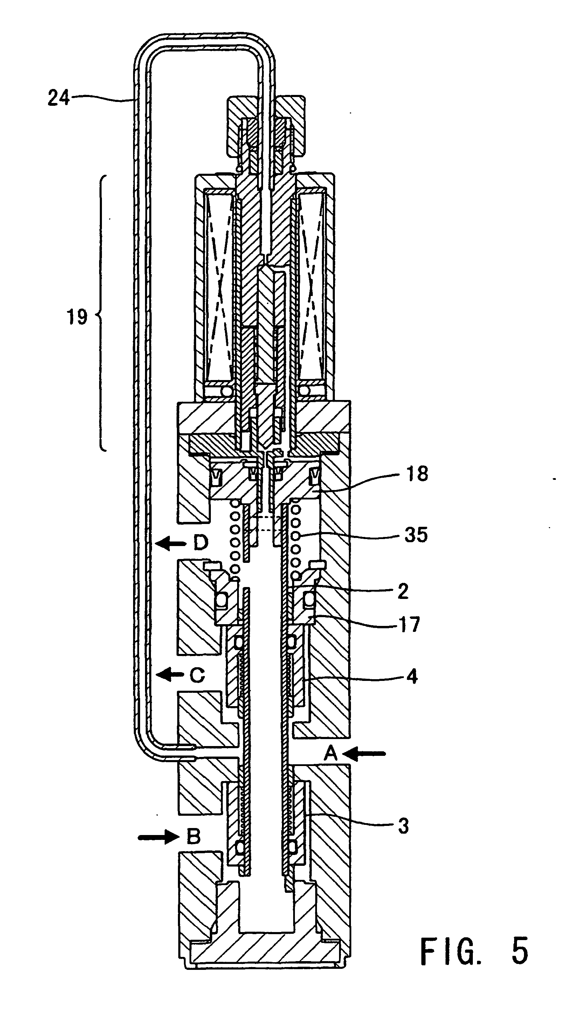

The third embodiment of Figs 4, 5 has valve elements 3, 4 with identical dimensions. The force pushing the valve elements 3, 4 upwards is obtained by a spring 35.

The sleeve 2 and the piston 18 are connected by a shaft 36. The spring 35 is arranged between the guide 17 and the piston 18 urging the piston 18 upward.

When the solenoid is OFF (Fig. 4), the high pressure present at port A reaches the pressure chamber on the upper side of the piston 18 via the tube 24 and the three-way solenoid valve 19 to overcome the force of the spring 35 and to push the piston 18 downward.

The ports A and B and the ports C and D are connected, for setting the cooling operation mode of the heating and cooling system.

When the solenoid is ON, (Fig. 5), the pressure in the pressure chamber on the upper side of the piston 18 is reduced to deprive the piston 18 of the driving force. The spring 35 pushes the piston 18 upward together with the sleeve 2 connected to the piston 18 and the valve elements 3, 4 on the sleeve 2.

The ports A, C and the ports B, D then become connected, for the heating operation mode of the heating and cooling system.

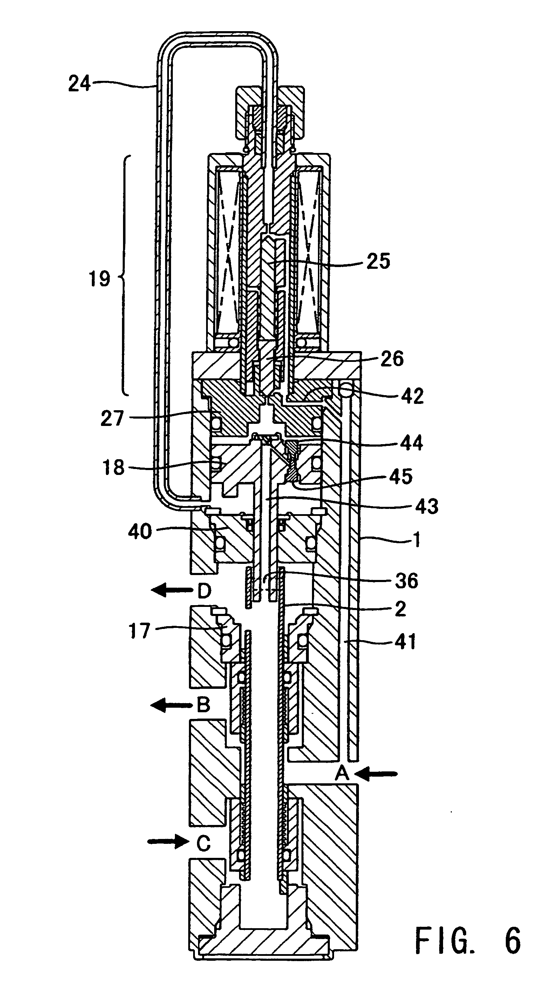

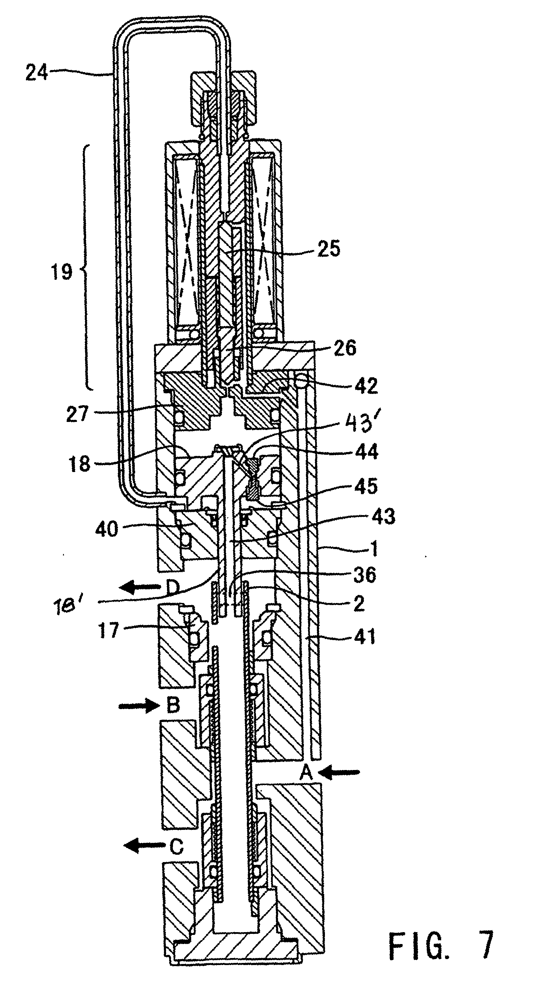

The fourth embodiment Figs 6, 7 differs from the first embodiment in that pressure chambers are formed on upper and lower sides of the piston 18, and in that the three-way solenoid valve 19 selectively directs high-pressure refrigerant into these pressure chambers, whereby the piston 18 is moved to actuate the valve elements 3, 4.

A guide 40 or separating ring is fixed in the body between the guide 17 forming the valve seat for the valve element 4 and the piston 18 to define a pressure chamber on the lower side of the piston 18. The body 1 and its cap 27 are formed with refrigerant passages 41, 42, for introducing high-pressure refrigerant to the three-way solenoid valve 19. One outlet port of the three-way solenoid valve 19 communicates with the pressure chamber on the upper side of the piston 18 via a valve hole which is opened and closed by the needle 26. The other outlet port of the valve 19 communicates with the pressure chamber on the lower side of the piston 18 via a valve hole which is opened and closed by the needle 25 and the tube 24. The piston 18 has an axial refrigerant passage 43 which is closed at an upper end, and further a small-diameter communication passage 43' to communicate between the refrigerant passage 43 and the pressure chambers defined on the upper and lower sides of the piston 18. Valve elements 44, 45 are arranged in communication passages to the small-diameter communication passage 43', for receiving the pressures in the pressure chambers to alternatingly close the communication passages, respectively. These valve elements 44, 45 are arranged opposed to each other. When one of these valve elements 44, 45 closes its associated communication passage, the other operates in an interlocked fashion to open its communication passage, and vice versa. The piston 18 has a lower downwardly protruding end which extends through the guide 40, and is connected to the sleeve 2 here by the laterally arranged shaft 36.

It should be noted that the fourth embodiment has the ports arranged differently from the first to third embodiments, because ports B and C are arranged in a reversed fashion.

When the solenoid is OFF (Fig. 6), the high pressure at the port A is directed into the pressure chamber on the lower side of the piston 18 via the refrigerant passages 41, 42, the three-way solenoid valve 19, and the tube 24, to push the piston 18 upward. At this time, the pressure in the pressure chamber on the lower side of the piston 18 urges the valve element 45 to cut off the communication between the pressure chamber on the lower side of the piston 18 and the refrigerant passage 43 under low pressure, whereby the valve element 45 urges the valve element 44 to connect the pressure chamber on the upper side of the piston 18 and the refrigerant passage 43 under low pressure.

This causes the piston 18 to move the sleeve 2 upward, to switch the two three-way switching valves, whereby the ports A and B, and the ports C and D are connected, for the cooling operation mode of the heating and cooling system. The high-pressure refrigerant from port A flows from port B to the external heat exchanger. The refrigerant from the internal heat exchanger and received at port C flows from port D to the compressor.

When the solenoid is ON (Fig. 7), the high pressure at port A is directed into the pressure chamber on the upper side of the piston 18 via the refrigerant passages 41, 42 and the three-way solenoid valve 19, to push the piston 18 downward. The pressure in the pressure chamber on the upper side of the piston 18 urges the valve element 44 to cut off communication between the pressure chamber on the upper side of the piston 18 and the refrigerant passage 43 under low pressure, whereby the valve element 44 urges the valve element 45 to connect the pressure chamber on the lower side of the piston 18 and the refrigerant passage 43 under low pressure.

This causes the piston 18 to push down the sleeve 2 to switch the two three-way switching valves, whereby the ports A and C and the ports B and D are connected, for heating operation mode of the heating and cooling system. The high-pressure refrigerant received at the port A flows from port C to the internal heat exchanger. The refrigerant delivered from the external heat exchanger and received at port flows from port D to the compressor.

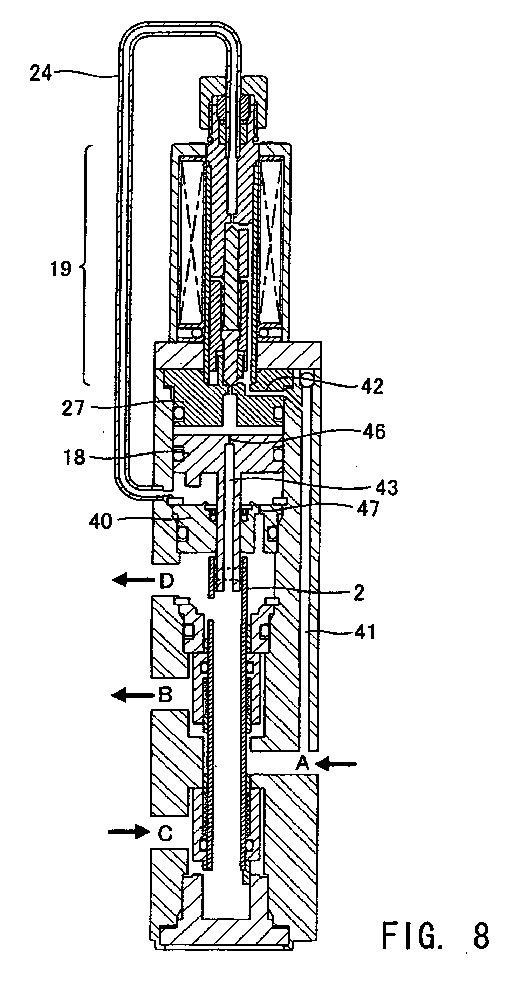

The fifth embodiment of Fig. 8 differs from the fourth embodiment in that the functions of the valve elements 44, 45 provided in the piston 18 are constituted by orifices.

The piston 18 has an orifice 46 between the refrigerant passage 43 axially extending through the piston 18 and the pressure chamber on the upper side of the piston 18. The guide 40 has an orifice 47 between the pressure chamber on the lower side of the piston 18 and the low-pressure space at port D.

When the solenoid is OFF (Fig. 8), the high pressure at port A reaches the pressure chamber on the lower side of the piston 18 via the refrigerant passages 41, 42, the three-way solenoid valve 19, and the tube 24. Although refrigerant may leak through at a small flow rate from the pressure chamber on the lower side of the piston 18 to the low-pressure space at port D via orifice 47, the high pressure in the compression chamber on the lower side of the piston 18 is maintained because high-pressure refrigerant is introduced at a much higher flow rate. If refrigerant leaks through at a small flow rate from the pressure chamber on the upper side of the piston 18, to which introduction of high pressure is stopped, to the low-pressure space at port D via the orifice 46 the pressure in the pressure chamber on the upper side of the piston is progressively decreased. This causes the piston 18 to be pushed upward. The piston 18 moves the sleeve 2 upward, to switch the two three-way switching valves, whereby ports A and port B, and ports C and D are connected for the cooling operation mode of the heating and cooling system. The high-pressure refrigerant received at port A flows from port B to the external heat exchanger. The refrigerant from the internal heat exchanger and received at port C flows from port D to the compressor.

When the solenoid is ON, the high pressure at port A reaches the pressure chamber on the upper side of the piston 18 via the refrigerant passages 41, 42, and the three-way solenoid valve 19. At this time, although the refrigerant leaks from the pressure chamber on the upper side of the piston 18 to the low-pressure space at the port D via the orifice 46 at a small flow rate, the high pressure in the compression chamber on the upper side of the piston 18 is maintained because the high-pressure refrigerant is introduced at a much higher flow rate. Refrigerant leaking from the pressure chamber on the lower side of the piston 18, to which introduction of high pressure is stopped, to the low-pressure space at the port D via the orifice 47 at a small flow rate progressively decreases the pressure in the pressure chamber on the lower side. This causes the piston 18 to be pushed downward. The piston 18 pushes the sleeve 2 downward, to switch the two three-way solenoid valves until ports A and C and ports B and D are connected for the heating operation mode of the heating and cooling system. The high-pressure refrigerant at port A flows from port C to the internal heat exchanger. The refrigerant from the external heat exchanger and received at port B flows from port D to the compressor.

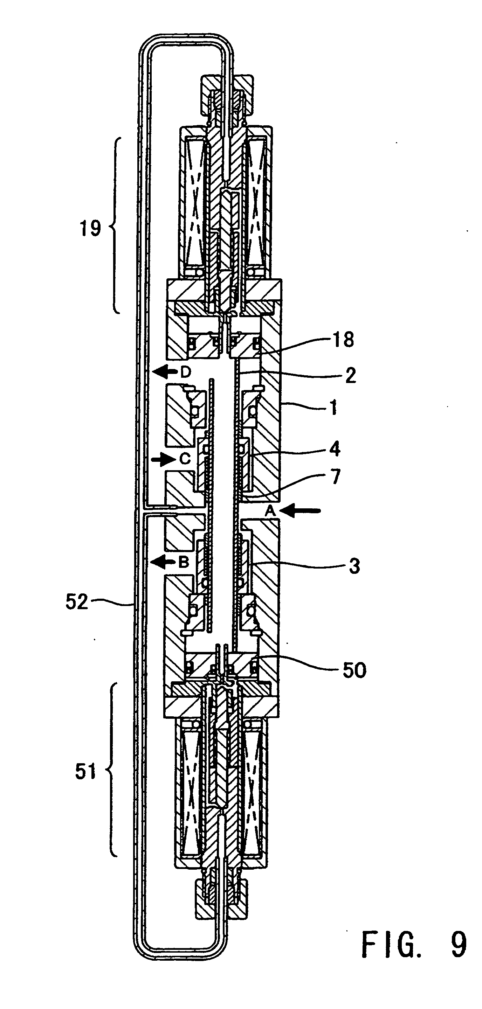

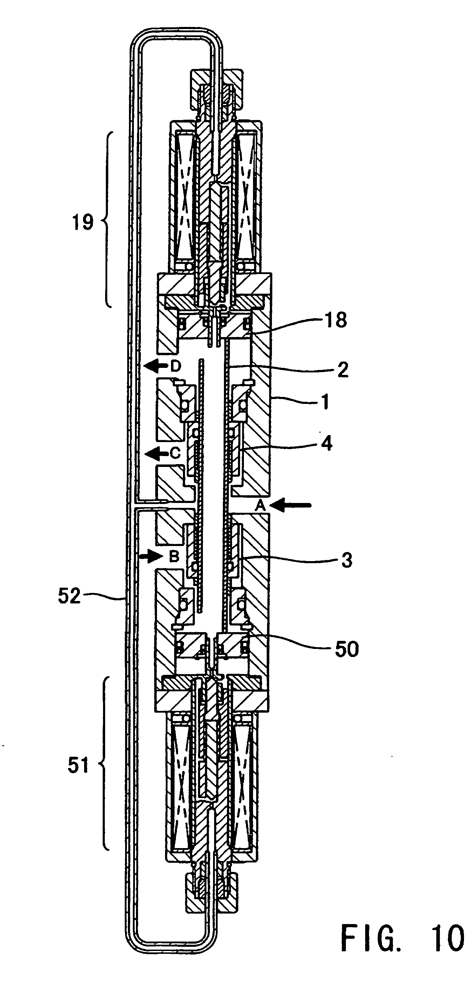

The sixth embodiment of Figs 9, 10 differs from the first embodiment in that the body 1 is configured to have the same construction at an opposite end thereof to push the here equally sized valve elements 3, 4 upward.

More specifically, a piston 50 and a three-way solenoid valve 51 are provided on the lower end of the body 1. The three-way solenoid valve 51 and the high-pressure space communicating with the port A are connected by a tube 52 also connected to the three-way solenoid valve 19.

When the upper three-way solenoid valve 19 is not energized (Fig. 9) (solenoid OFF), and when the lower three-way solenoid valve 51 is energized (solenoid ON), the upper three-way solenoid valve 19 connects the pressure chamber on the upper side of the piston 18 with port A to increase the pressure in the pressure chamber, while the lower three-way solenoid valve 51 connects the pressure chamber on the lower side of the piston 50 with port D to decrease the pressure in the pressure chamber. The piston 18 pushes the sleeve 2 and the valve elements 3, 4 downward so that ports A and B and ports C and D are connected for the cooling operation mode of the heating and cooling system. The high-pressure refrigerant at port A flows from port B to the external heat exchanger. The refrigerant from the internal heat exchanger and received at port C flows from port D to the compressor.

When the upper three-way solenoid valve 19 is energized and the lower three-way solenoid valve 51 is deenergized, the upper three-way solenoid valve 19 connects the pressure chamber on the upper side of the piston 18 with port D to decrease the pressure in the pressure chamber. The lower three-way solenoid valve 51 connects the pressure chamber on the lower side of the piston 50 with port A to increase the pressure in the pressure chamber. Piston 50 pushes the sleeve 2 and the valve elements 3, 4 upward to connect ports A and C and ports B and D for the heating operation mode of the heating and cooling system. The high-pressure refrigerant at port A flows from port C to the internal heat exchanger. The refrigerant from the external heat exchanger and received at port B flows from port D to the compressor.

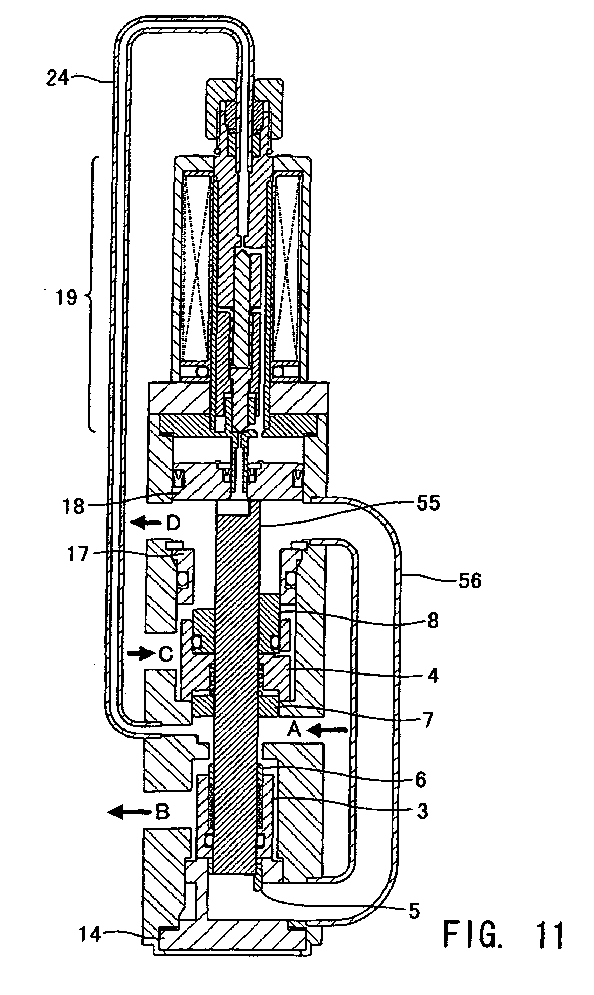

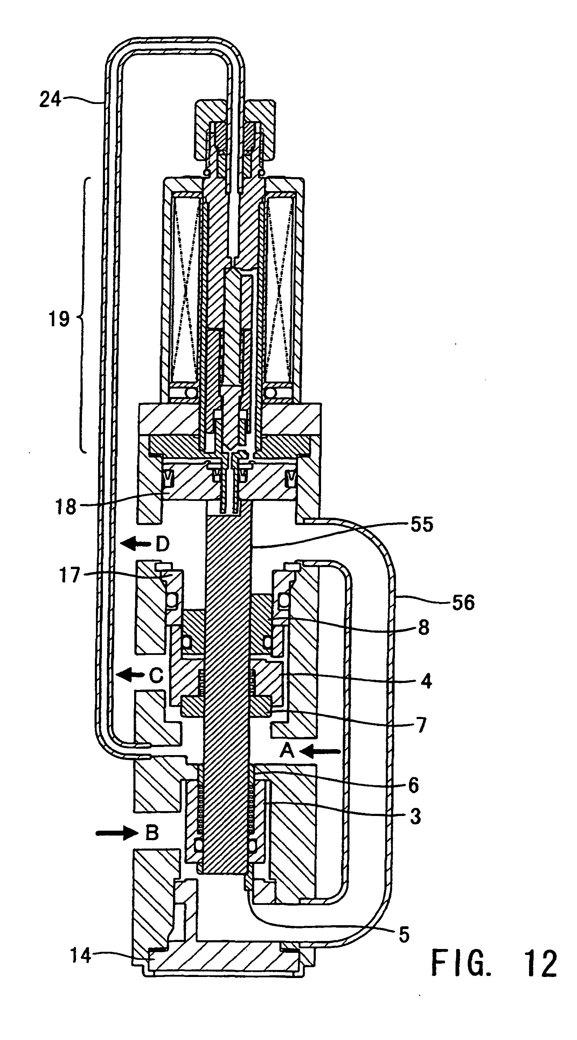

The seventh embodiment of Figs 11, 12 has substantially the same internal construction as the first embodiment, and operates in the same manner, but is different in the design of the low-pressure refrigerant passages. More specifically, in the seventh embodiment, the valve elements 3, 4 and the guides 5, 6, 7, 8 are held on a solid driving rod 55, and spaces at both ends of the driving rod 55, i.e. a space in a recess formed in the cap 14 to define a refrigerant passage together with a guide for axially guiding the guide 5, and a space defined between the guide 17 and the piston 18, are interconnected by a tube 56.

When the solenoid is OFF (Fig. 11), the high pressure at the port A reaches the pressure chamber on the upper side of the piston 18 via the tube 24 and the three-way solenoid valve 19, thereby pushing the piston 18 downward. The ports A and B and ports C and D are connected for the cooling operation mode of the heating and cooling system. The high-pressure refrigerant at port A flows from port B to the external heat exchanger. The refrigerant from the internal heat exchanger and received at port C flows from port D to the compressor.

When the solenoid is ON (Fig. 12), the pressure chamber on the upper side of the piston 18 is switched to the low pressure, and the guides 7, 8 fixed to the driving rod 55 receive larger pressure than the guide 6.

This pushes the driving rod 55 upward whereby the ports A and C, and ports B and D are connected via the tube 56 for the heating operation mode.

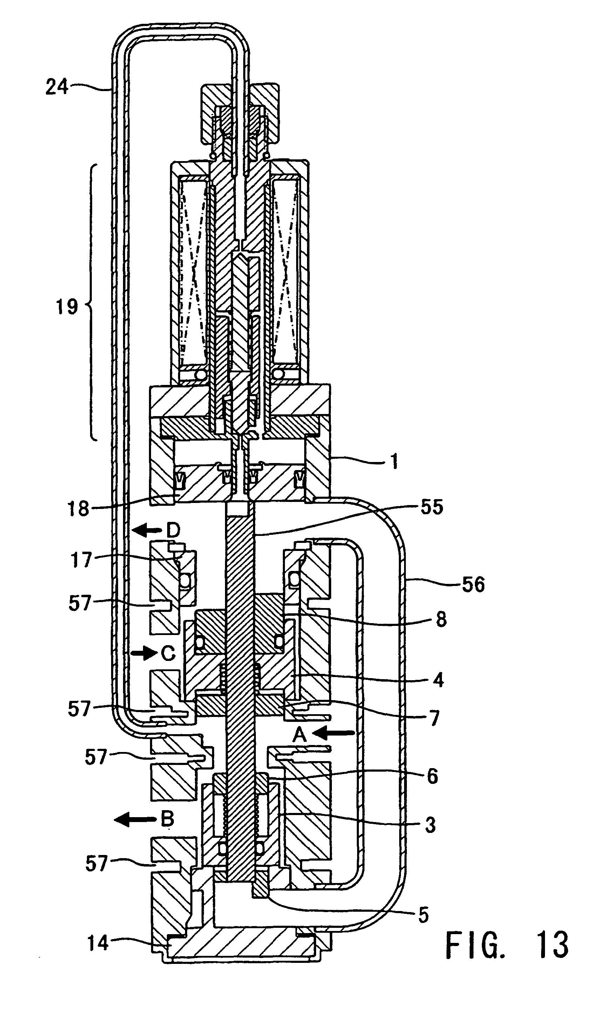

The eighth embodiment of Fig. 13 has the same internal construction as the seventh embodiment, and operates in the same manner, but the shape of the body 1 is modified to reduce heat loss.

The eighth embodiment includes a thickness-reducing recess 57 formed by a cut from the outer periphery into a portion of the body 1 between the low-pressure passage and the high-pressure passage. This increases the thermal resistance between the high-pressure passage through which the refrigerant at high temperature flows and the low-pressure chamber through which the refrigerant at low temperature flows, thereby reducing heat conduction from the high-pressure passage to the low-pressure passage inside the body 1. This design reduces heat loss within the four-way switching valve.

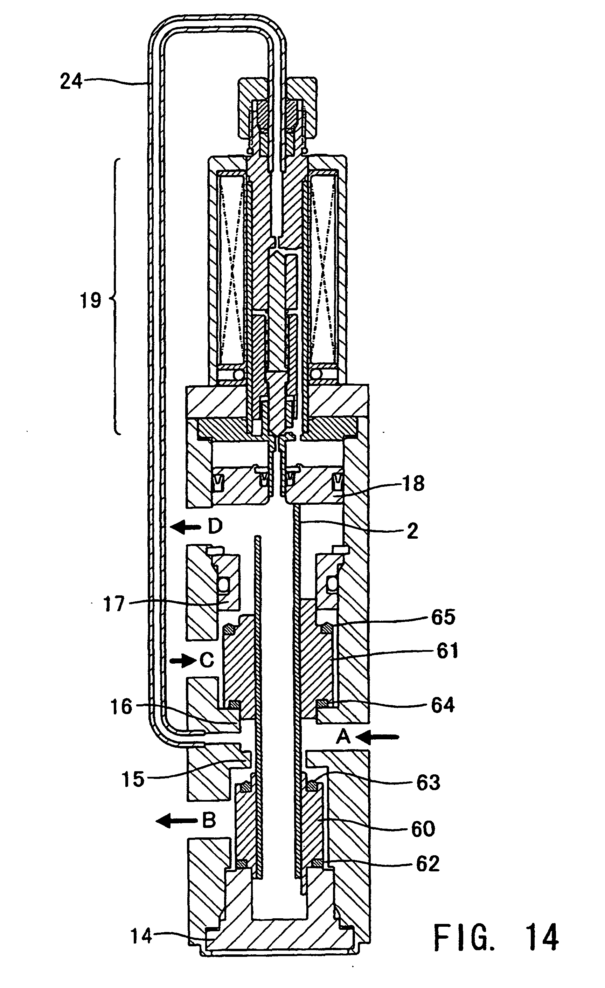

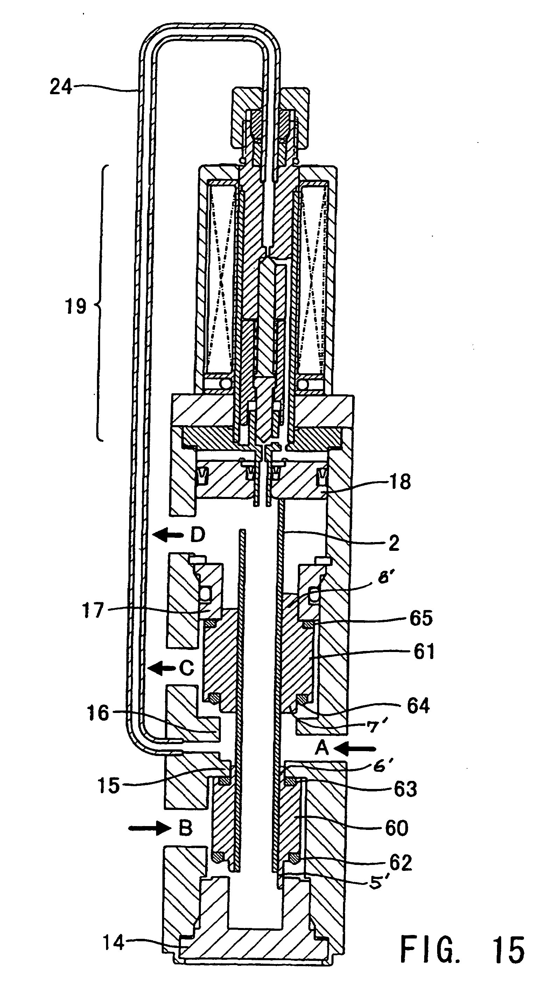

The ninth embodiment of Figs 14, 15 has substantially the same internal construction, and operates in the same manner as the first embodiment but is different in that the valve elements 3, 4 and the guides 5, 6, 7, 8 mounted on the sleeve 2 are integrally formed with each other in plugs 60, 61. Sealing rings improve the sealing properties during closing of the valves and serve to provide the functions of the springs 9, 10 of the first embodiment.

In the ninth embodiment, the two plugs 60, 61 are secured to the sleeve 2, and portions of the plugs 60, 61 via which they are seated on the cap 14, the annular projections 15, 16, and the guide 17, carry seal rings 62, 63, 64, 65 fitted thereon. The plugs 60, 61 have large-diameter portions which form valves together with the cap 14, the annular projections 15, 16, and the guide 17, and small-diameter portions defining the guides 5', 6', 7', 8' integrally formed with the respective large-diameter portions, which protrude axially at both ends and open and close associated valve holes while guiding the axial motions of the sleeve 2 and the plugs 60, 61. The seal rings 62, 63, 64, 65 are fitted on the plugs 60, 61 such that they protrude from the seating surfaces of the plugs. The rings are made of a resilient material, such as rubber and/or polytetrafluoroethylene. This increases the sealing properties of each valve in closed condition without enhancing the necessary machining accuracy of portions where the valve elements are seated. When the plugs 60, 61 are seated at different timings, the one plug seated earlier is deformed largely by its resilience to accommodate the distance over which the other plug moves to be seated subsequently.

When the solenoid is OFF (Fig. 14), the high pressure at port A reaches the pressure chamber defined on the upper side of the piston 18 via the tube 24 and the three-way solenoid valve 19, thereby pushing the piston 18 downward. Ports A and B and ports C and D are connected for the cooling operation mode of the heating and cooling system. The high-pressure refrigerant at port A flows from port B to the external heat exchanger. The refrigerant from the internal heat exchanger and received at port C flows from port D to the compressor.

When the solenoid is ON (Fig. 15), the pressure chamber on the upper side of the piston 18 is switched to the low pressure by the three-way solenoid valve 19, whereby the piston 18 is deprived of the force of pushing the sleeve 2 downward. The plug 61 secured to the sleeve 2 receives higher pressure than the plug 60. The sleeve 2 is pushed upward.

The ports A and C, and the ports B and D are connected for the heating operation mode of the heating and cooling system. The high-pressure refrigerant at port A flows from port C to the internal heat exchanger. The refrigerant from the external heat exchanger and received at port B flows from port D to the compressor.

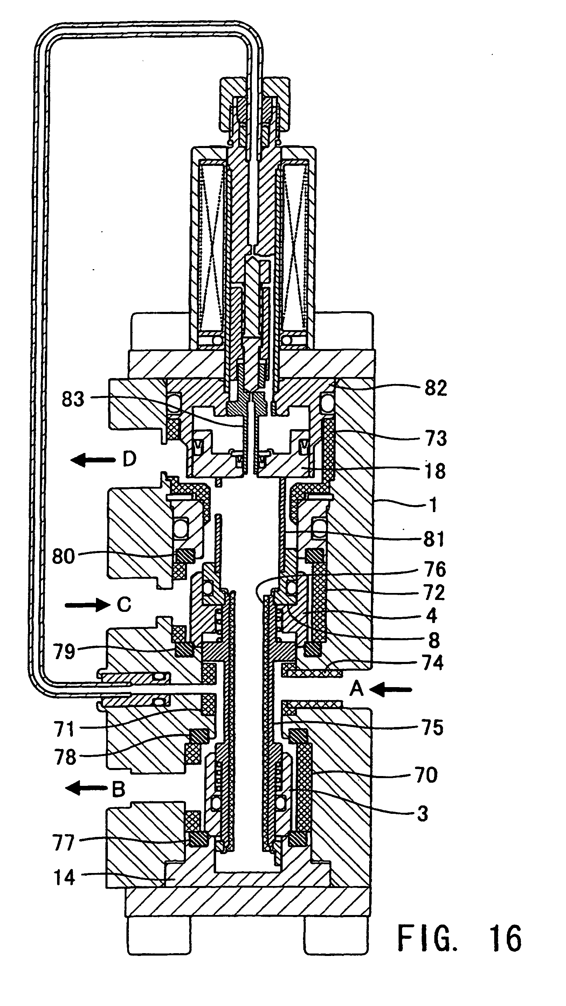

The tenth embodiment of Fig. 16 has the same internal basic construction and operates in the same way as the first embodiment, but differs in that passages through which the refrigerant passes are formed to have a heat-insulating structure, and the sealing properties of the valve element of each closed valve are improved.

For heat-insulating purposes a plurality of resin sleeves 70, 71, 72, 73 are fitted on the inner walls of passages of the body 1 divided according to the inner diameters of the passages. A resin sleeve 74 also is arranged in a refrigerant passage of port A. A driving rod 75 (a hollow cylinder integrally formed with a guide, for holding the valve elements 3, 4) also contains a resin sleeve 76 in a central refrigerant passage. The heat insulation of the refrigerant passages suppresses conduction of heat via the body 1. When the body 1 is made of a material with excellent thermal conductivity such as aluminum, the insulation configuration effectively reduces heat loss in the four-way switching valve. The resin sleeves 70, 71, 72, 73, 74 can e.g. consist of a polyphenylene sulfide resin.

For improved sealing properties of the closed valves, seal rings 77, 78, 79, 80 with resilient properties are provided. They have a rectangular cross-sectional shape and are fitted on the cap 14, the annular projections 15, 16, and the guide 17. The seal rings 77, 78, 79, 80 are deformed by pressure when the valve elements 3, 4 are seated to air-tightly close between the valve elements 3, 4 and their associated valve seats. This improves the sealing properties of each closed valve without enhancing the machining accuracy of portions where the valve elements are seated. The seal rings 77, 78, 79, 80 can be made e.g. of rubber, polytetrafluoroethylene, or a like material.

The driving rod 75 has the guide 8 secured to an upper end thereof by caulking. The sleeve 81 is press fitted into a central opening of the guide 8. The sleeve 81 has one open end for communication with the space at the port D.

Although in the first embodiment, the upper end of the body 1 is closed by the cap 27 integrally formed with the valve seat for the needle valve for opening and closing the communication between the pressure chamber on the upper side of the piston 18 and the space at the port D and the refrigerant passage extending axially along the piston 18, in the tenth embodiment, there are two separate components instead. More specifically, the open upper end of the body 1 is closed by a cap 82. A hollow cylindrical downwardly hanging portion is formed on cap 82 for movably receiving the piston 18. Fitted to the central portion of the cap 82 is an upper end portion of a low-pressure communicating member 83 having a valve hole and a refrigerant passage extending axially therethrough, while a lower end portion of the member 83 air-tightly extends through a center opening of the piston 18.

Although in the first to tenth embodiments, the port D under low pressure arranged axially outward of the two three-way switching valves is communicated by the hollow cylindrical tube 2 or the tube 56 arranged outside the body, the same may be communicated by a longitudinal passage formed through the body 1 such that the openings of ports A to D may be avoided.

## Claims

1. A four-way switching valve for switching between a first state in which a fluid introduced into a first port (A) is guided to a second port (B) and the fluid introduced into a third port (C) is guided to a fourth port (D), and a second state in which the fluid introduced into the first port (A) is guided to the third port (C) and the fluid introduced into the second port (B) is guided to the fourth port (D),
the four-way switching valve comprising:
a first three-way switching valve switchable to connect the second port (B) either to the first port (A) or the fourth port (D);
a second three-way switching valve switchable in unison with the first three-way switching valve to connect the third port (C) either to the fourth port (D) or the first port (A); and
a piston (18) for simultaneously actuating a valve element (3) of the first three-way switching valve and a valve element (4) of the second three-way switching valve,
the first three-way switching valve, the second three-way switching valve, and the piston (18) being coaxially arranged within a hollow cylindrical body (1), **characterised in that**,
the first and second three-way switching valve elements (3, 4) are axially slidably arranged on an axial driving rod (2, 55, 75) for opening and closing valve holes of valve seats of the body (1) as formed at openings of passages which are arranged on axially both sides of the respective valve element and communicate with the first and the fourth ports (A, D),
guides (5, 6, 7, 8) are fixed to the driving rod (2, 55) and axially protruding outward from axially opposite seating surfaces of the valve element (3, 4), for being inserted into the respective valve hole to close the valve hole before the valve element (3, 4) is seated, and at the same time for limiting an axial travel range of the respective valve element (3, 4) on the driving rod, and
a spring (9, 10) urges the valve elements (3, 4) in such a direction that the respective valve element (3, 4) is brought into abutment with an axially outwardly arranged one (5, 8) of the guides (5, 6, 7, 8).

2. The four-way switching valve according to claim 1, wherein a high-pressure space communicating with the first port (A) is arranged between the first and second three-way switching valves, wherein a low-pressure space communicating with the fourth port (D) is arranged on an axially outer side of the driving rod (2, 55), and wherein spaces accommodating the valve elements (3, 4) three-way switching valves are communicated with the second port (B) and the third port (C), respectively.

3. The four-way switching valve according to claim 2, wherein the driving rod (2) is formed by a hollow cylindrical sleeve to connect spaces arranged on axially outer sides of the sleeve with the fourth port (D).

4. The four-way switching valve according to claim 2, wherein spaces arranged on axially outer sides of the driving rod (2) are communicated with each other by tubing or by a passage formed in the body (1) to connect the spaces with the fourth port (D).

5. The four-way switching valve according to claim 2, wherein a three-way solenoid valve (19) for selectively connecting a pressure chamber on a side of the piston (18) opposite to the side of the piston (18) where the first and second three-way switching valves are arranged, with the first port (A) or the fourth port (D), thereby, when the pressure chamber is communicated with the first port (A), causing the first and second three-way switching valves to be actuated in a first direction in which the piston (18) moves to switch the four-way switching valve to the first state.

6. The four-way switching valve according to claim 5, wherein one of the first and second three-way switching valves arranged closer to the piston (18) is configured to have a larger pressure-receiving area than a pressure-receiving area of the other, whereby when the three-way solenoid valve connects the pressure chamber with the fourth port (D), the piston (18) is actuated in a second direction opposite to the first direction by a driving force generated due to the difference in the pressure-receiving areas, thereby switching the first and second three-way switching valves to the second state.

7. The four-way switching valve according to claim 5, wherein a spring (35) is provided for actuating the first three-way switching valve, the second three-way switching valve, and the piston (18) in a second direction opposite to the first direction, to thereby switch the first and second three-way switching valves to the second state, when the three-way solenoid valve (19) connects the pressure chamber to the fourth port (D).

8. The four-way switching valve according to claim 2, wherein first and second pressure chambers are provided on both axial sides of the piston (18), and a three-way solenoid valve (19) is provided for selectively communicating the first port (A) with the first pressure chamber or the second pressure chamber to thereby selectively introduce the fluid introduced into the first port (A) into the first pressure chamber or the second pressure chamber, whereby the piston (18) axially switches the three-way switching valves to the first or the second state.

9. The four-way switching valve according to claim 8, wherein the piston (18) includes a first opening/closing valve (44) for opening and closing a first orifice provided between the first pressure chamber and a low-pressure passage communicating with the fourth port, and a second opening/closing valve (45) for opening and closing a second orifice provided between the second pressure chamber and the low-pressure passage, and wherein the first and second opening/closing valves (44, 45) are arranged such that the first opening/closing valve closes when pressure in the first pressure chamber is high, and the second opening/closing valve opens in a manner interlocked with the closing operation of the first opening/closing valve, and that the second opening/closing valve closes when pressure in the second pressure chamber is high and the first opening/closing valve opens in a manner interlocked with the closing operation of the second opening/closing valve.

10. The four-way switching valve according to claim 8, wherein the piston (18) has a first orifice provided between the first pressure chamber and a low-pressure passage communicating with the fourth port (D), and a second orifice is provided in a member (40) separating the second pressure chamber and the low-pressure passage from each other.

11. The four-way switching valve according to claim 5, wherein a second piston (50) is arranged on a side of the first and the second three-way switching valves opposite to a side where the piston (18) is arranged, for actuating the first and second three-way switching valves in a second direction opposite to the first direction, and
wherein a second three-way solenoid valve (51) for selectively communicating a second pressure chamber arranged on a side of the second piston (50) opposite to a side thereof where the first and second three-way switching valves are arranged, with the first port (A) or the fourth port (D), thereby, when the second pressure chamber is communicated with the first port (A), causing the second piston (50) to actuate the first and second three-way switching valves in the second direction to switch the four-way switching valve to the second state.

12. The four-way switching valve according to claim 1, wherein the first and second three-way switching valves have sealing members (62-65; 77,78,79) arranged at portions where the valve elements (3, 4; 60, 61) are seated, in an interposed manner.

13. A four-way switching valve for switching between a first state in which a fluid introduced into a first port (A) is guided to a second port (B) and the fluid introduced into a third port (C) is guided to a fourth port (D) and a second state in which the fluid introduced into the first port (A) is guided to the third port (C) and the fluid introduced into the second port (B) is guided to the fourth port (D),
the four-way switching valve comprising:
a first three-way switching valve switchable to connect the second port (B) either with the first port (A) or the fourth port (D);
a second three-way switching valve switchable in unison with the first three-way switching valve to connect the third port (C) either with the fourth port (D) or the first port (A);
a piston (18) for simultaneously actuating a valve element (60) of the first three-way switching valve and a valve element (61) of the second three-way switching valve;
wherein the first and second three-way switching valves each comprise a valve element (60, 61) fixed to an axially movable driving rod (2), for opening and closing valve holes formed at openings of passages which are arranged on axially both sides of the respective valve element (60, 61) and communicated with the first port (A) and the fourth port (D), **characterised in that**, the four-way valve also comprises:
a hollow cylindrical body (1) having the first three-way switching valve, the second three-way switching valve, and the piston (18) coaxially arranged therein in this sequence; and
a three-way solenoid valve (19) for selectively communicating a pressure chamber arranged on a side of the piston (18) opposite to a side thereof where the first three-way switching valve is arranged, with the first port (A) or the fourth port (D), thereby, when the pressure chamber is communicated with the first port (A), causing the first and second three-way switching valves to be actuated in a first direction in which the piston (18) moves to switch the four-way switching valve to the first state,
and **in that** guides (5', 6', 7', 8') are provided each fixed to the driving rod (2) and axially protruding outward from axially opposite seating surfaces of the respective valve element (60, 61), for being inserted into the respective valve hole to close the valve hole before the valve element (60, 61) is seated, and resilient sealing members (62-65) are arranged at seat surface portions where the valve elements are seated, and
the second three-way switching valve is configured to have a larger pressure-receiving area than a pressure-receiving area of the first three-way switching valve, whereby when the three-way solenoid valve (79) causes the pressure chamber to be communicated with the fourth port (D), the piston (18) is actuated in a second direction opposite to the first direction by a driving force generated due to a difference in the pressure-receiving areas, thereby switching the first and second three-way switching valves to the second state.

14. The four-way switching valve according to claim 13, wherein the valve elements (60, 61) and the guides (5'-8') of the first and second three-way switching valves are integrally formed with each other as plugs secured on the outside of the hollow driving rod (2).

15. The four-way switching valve according to claim 1 or 13, wherein the hollow cylindrical body (1) accommodating the first and second three-way switching valves has a double structure in which an inner part thereof is formed by a resin body (30) and an outer part thereof is formed by a metal body (31).

16. The four-way switching valve according to claim 1 or 13, wherein the hollow cylindrical body (1) accommodating the first and second three-way switching valves has a thickness-reducing portion (57) provided between a low-pressure passage and a high-pressure passage to thereby suppress heat conduction therebetween.

17. A four-way switching valve, particularly for a heating and cooling system for an automotive vehicle, for selectively switching between first and second states interconnecting either first and second ports (A, B) and third and fourth ports (C, D) or the first and third ports (A, C) and the second and fourth ports (B, D), the valve comprising a body (1), flow passages, valve elements, and valve seats within the body, and at least one solenoid valve for switching the four-way switching valve,
**characterised in that**,
in a substantially cylindrical chamber of the body (1) a hollow or solid driving rod (2, 55, 75) is axially movably guided by means of several sleeve-shaped guides (5, 6, 7, 8, 5', 6', 7' 8') secured to the periphery of the driving rod (2, 55, 75) and several cylindrical guide surfaces of valve holes of the body (1),
the driving rod carries between respective two of the guides two separate valve elements (3, 4, 60, 61) of first and second coaxial three-way switching valves,
the valve elements are axially adjustable at least by axial movement of the driving rod to be seated on or unseated from respective associated valve seats of the valve holes of the body (1), and
wherein the driving rod (2, 55, 75) is axially movable by at least one piston (18, 50) coaxially movably arranged in the cylindrical chamber of the body (1), the pressure actuation of the piston (18, 50) being controlled by at least one three-way solenoid valve (19, 51) located at one axial outer end of the body (1).

## Patentansprüche

1. Vierwege-Schaltventil zum Umschalten zwischen einem ersten Status, in welchem ein in einen ersten Anschluss (A) eingeführtes Fluid zu einem zweiten Anschluss (B) und das in einen dritten Anschluss (C) eingeführte Fluid zu einem vierten Anschluss (D) geführt wird, und einem zweiten Status, in welchem das in den ersten Anschluss (A) eingeführte Fluid zu dem dritten Anschluss (C) und das in den zweiten Anschluss (B) eingeführte Fluid zu dem vierten Anschluss (D) geführt wird,
wobei das Vierwege-Schaltventil umfasst:
ein erstes Dreiwege-Schaltventil, das schaltbar ist zum Verbinden des zweiten Anschlusses (B) entweder mit dem ersten Anschluss (A) oder dem vierten Anschluss (D);
ein zweites Dreiwege-Schaltventil, das im Zusammenspiel mit dem ersten Dreiwege-Schaltventil schaltbar ist zum Verbinden des dritten Anschlusses (C) entweder mit dem vierten Anschluss (D) oder dem ersten Anschluss (A);
einen Kolben (18) zum gleichzeitigen Betätigen eines Ventilelements (3) des ersten Dreiwege-Schaltventils und eines Ventilelements (4) des zweiten Dreiwege-Schaltventils;
wobei das erste Dreiwege-Schaltventil, das das zweite Dreiwege-Schaltventil und der Kolben (18) in einem hohlen zylindrischen Körper (1) koaxial angeordnet sind,
**dadurch gekennzeichnet, dass**
die Ventilelemente (3, 4) der ersten und zweiten Dreiwege-Schaltventile axial verschiebbar angeordnet sind auf einer axialen Treibstange (2, 55, 75) zum Öffnen und Schließen von Ventilöffnungen von Ventilsitzen des Körpers (1), die geformt sind an Mündungen von Passagen, die axial an beiden Seiten des jeweiligen Ventilelements angeordnet sind und mit den ersten und den vierten Anschlüssen (A, D) kommunizieren,
an der Treibstange (2, 55) Führungen (5, 6, 7, 8) fixiert sind, die axial nach außen vorstehen von axial gegenüberliegenden Sitzflächen der Ventilelemente (3, 4) zum Einsetzen in die jeweilige Ventilöffnung und zum Schließen der Ventilöffnung, ehe das jeweilige Ventilelement (3, 4) aufgesetzt wird, und zur gleichen Zeit zum Begrenzen eines axialen Hubbereichs des jeweiligen Ventilelements (3, 4) auf der Treibstange, und
eine Feder (9, 10), die Ventilelemente (3, 4) in einer solchen Richtung beaufschlagt, dass das jeweilige Ventilelement (3, 4) in Anlage an einer der axial außen angeordneten Führungen (5, 6, 7, 8) gebracht wird.

2. Vierwege-Schaltventil gemäß Anspruch 1, in welchem ein mit dem ersten Anschluss (A) kommunizierender Hochdruckraum zwischen den ersten und zweiten Dreiwege-Schaltventilen angeordnet ist, in welchem ein mit dem vierten Anschluss (D) kommunizierender Niederdruckraum an einer axial äußeren Seite der Treibstange (2, 55) angeordnet ist und in welchem die Ventilelemente (2, 4) der Dreiwege-Schaltventile enthaltende Räume mit dem zweiten Anschluss (B) und dem dritten Anschluss (C) jeweils in Strömungsverbindung sind.

3. Vierwege-Schaltventil gemäß Anspruch 2, in welchem die Treibstange (2) geformt wird von einer hohlen zylindrischen Hülse zum Verbinden von Räumen, die an axial äußeren Seiten der Hülse angeordnet sind, mit dem vierten Anschluss (D).

4. Vierwege-Schaltventil gemäß Anspruch 2, in welchem an axial äußeren Seiten der Treibstange (2) angeordnete Räume miteinander in Strömungsverbindung sind durch eine Verrohrung oder eine in dem Körper (1) geformte Passage zum Verbinden der Räume mit dem vierten Anschluss (D).

5. Vierwege-Schaltventil gemäß Anspruch 2, in welchem ein Dreiwege-Magnetventil (19) vorgesehen ist zum wahlweisen Verbinden einer Druckkammer an einer Seite des Kolbens (18) gegenüberliegend zu derjenigen Seite des Kolbens (18), an der die ersten und zweiten Dreiwege-Schaltventile angeordnet sind, mit dem ersten Anschluss (A) oder dem vierten Anschluss (D), um dadurch, sobald die Druckkammer in Strömungsverbindung mit dem ersten Anschluss (A) ist, zu bewirken, dass die ersten und zweiten Dreiwege-Schaltventile in einer ersten Richtung betätigt werden, in der sich der Kolben (18) bewegt, zum Schalten des Vierwege-Schaltventils in den ersten Status.

6. Vierwege-Schaltventil gemäß Anspruch 5, in welchem das eine näher bei dem Kolben (18) angeordnete der ersten und zweiten Dreiwege-Schaltventile konfiguriert ist mit einer größeren druckaufnehmenden Fläche als eine druckaufnehmende Fläche des anderen, wodurch der Kolben (18) in einer zweiten Richtung entgegengesetzt zu der ersten Richtung durch eine Treibkraft beaufschlagbar ist, die generiert wird als Folge der Differenz der druckaufnehmenden Flächen, sobald das Dreiwege-Magnetventil die Druckkammer mit dem vierten Anschluss (D) verbindet, um dadurch die ersten und zweiten Dreiwege-Schaltventile in den zweiten Status zu schalten.

7. Vierwege-Schaltventil gemäß Anspruch 5, in welchem zum Betätigen des ersten Dreiwege-Schaltventils, des zweiten Dreiwege-Schaltventils und des Kolbens (18) in einer zweiten Richtung entgegengesetzt zu der ersten Richtung eine Feder (35) vorgesehen ist, um die ersten und zweiten Dreiwege-Schaltventile in den zweiten Status umzuschalten, sobald das Dreiwege-Schaltventil (19) die Druckkammer mit dem vierten Anschluss (D) verbindet.

8. Vierwege-Schaltventil gemäß Anspruch 2, in welchem an beiden axialen Seiten des Kolbens (18) erste und zweite Druckkammern vorgesehen sind, und ein Dreiwege-Magnetventil (19) vorgesehen ist zum wahlweisen Strömungsverbinden des ersten Anschlusses (A) mit der ersten Druckkammer oder der zweiten Druckkammer, um dadurch wahlweise das im ersten Anschluss (A) zugeführte Fluid in die erste Druckkammer oder die zweite Druckkammer einzuführen, wodurch der Kolben (18) die Dreiwege-Schaltventile axial zu dem ersten oder dem zweiten Status verstellt.

9. Vierwege-Schaltventil gemäß Anspruch 8, in welchem der Kolben (18) ein erstes Öffnungs/Schließventil (44) zum Öffnen und Schließen einer ersten Drosselöffnung umfasst, die zwischen der ersten Druckkammer und einer mit dem vierten Anschluss (D) kommunizierenden Niederdruckpassage vorgesehen ist, und ein zweites Öffnungs/Schließventil (45) zum Öffnen und Schließen einer zweiten Drosselöffnung, die zwischen der zweiten Druckkammer und der Niederdruckpassage angeordnet ist, und in welchem die ersten und zweiten Öffnungs/Schließventile (44, 45) so angeordnet sind, dass das erste Öffnungs/Schließventil schließt, falls der Druck in der ersten Druckkammer hoch ist und das zweite Öffnungs/Schließventil öffnet, auf eine Weise, die bewegungsgekuppelt ist mit der Schließoperation des ersten Öffnungs/Schließventils, und dass das zweite Öffnungs/Schließventil schließt, sobald der Druck in der zweiten Druckkammer hoch ist, und das erste Öffnungs/Schließventil öffnet, auf eine Weise, bewegungsgekuppelt mit der Schließoperation des zweiten Öffnungs/Schließventils.

10. Vierwege-Schaltventil gemäß Anspruch 8, in welchem der Kolben (18) eine erste Drosselöffnung aufweist, die zwischen der ersten Druckkammer und einer mit dem vierten Anschluss (D) strömungsverbundenen Niederdruckpassage angeordnet ist, und eine zweite Drosselöffnung vorgesehen ist in einem Glied (40), das die zweite Druckkammer und die Niederdruckpassage voneinander separiert.

11. Vierwege-Schaltventil gemäß Anspruch 5, in welchem an einer Seite der ersten und zweiten Dreiwege-Schaltventile abgewandt von einer Seite, an der der Kolben angeordnet ist, ein zweiten Kolben (50) vorgesehen ist zum Betätigen der ersten und zweiten Dreiwege-Schaltventile in einer zweiten Richtung entgegengesetzt zu der ersten Richtung, und
in welchem ein zweites Dreiwege-Magnetventil (51) zum wahlweisen Strömungsverbinden einer zweiten Druckkammer, die an einer Seite des zweiten Kolbens (50) entgegengesetzt zu einer Seite davon vorgesehen ist, an der die ersten und zweiten Dreiwege-Schaltventile angeordnet sind, mit dem ersten Anschluss (A) oder dem vierten Anschluss (D), um dadurch zu bewirken, dass der zweite, Kolben (50) die ersten und zweiten Dreiwege-Schaltventile in der zweiten Richtung beaufschlagt zum Umschalten des Vierwege-Schaltventils zu dem zweiten Status, sobald die zweite Druckkammer mit dem ersten Anschluss (A) strömungsverbunden ist.

12. Vierwege-Schaltventil gemäß Anspruch 1, in welchem die ersten und zweiten Dreiwege-Schaltventile Dichtglieder (62 - 65; 77, 78, 79) aufweisen, die an Abschnitten angeordnet sind, mit denen die Ventilelemente (3, 4; 60, 61) aufgesetzt werden, und zwar in einer dazwischenliegenden Weise.

13. Vierwege-Schaltventil zum Schalten zwischen einem ersten Status, in welchem ein in einem ersten Anschluss (A) eingeführtes Fluid zu einem zweiten Anschluss (B) geführt, und das in dem dritten Anschluss (C) eingeführte Fluid zu einem vierten Anschluss (D) geführt wird, und einem zweiten Status, in welchem das in den ersten Anschluss (A) eingeführte Fluid zu dem dritten Anschluss (C) und das in den zweiten Anschluss (B) eingeführte Fluid zu dem vierten Anschluss (D) geleitet wird,
wobei das Vierwege-Schaltventil aufweist:
ein erstes Dreiwege-Schaltventil, das umschaltbar ist zum Verbinden des zweiten Anschlusses (B) entweder mit dem ersten Anschluss (A) oder dem vierten Anschluss (D);
ein zweites Dreiwege-Schaltventil, das umschaltbar ist gemeinsam mit dem ersten Dreiwege-Schaltventil zum Verbinden des dritten Anschlusses (C) entweder mit dem vierten Anschluss (D) oder dem ersten Anschluss (A);
einen Kolben (18) zum gleichzeitigen Betätigen eines Ventilelements (60) des ersten Dreiwege-Schaltventils und eines Ventilelements (61) des zweiten Dreiwege-Schaltventils;
in welchem die ersten und zweiten Dreiwege-Schaltventile jeweils ein Ventilelement (60, 61) aufweisen, das an einer axial beweglichen Treibstange (2) fixiert ist, zum Öffnen und Schließen von Ventilöffnungen, die an Mündungen von Passagen geformt sind, die an axial beiden Seiten des jeweiligen Ventilelements (60, 61) angeordnet und mit dem ersten Anschluss (A) und dem vierten Anschluss (D) strömungsverbunden sind,
**dadurch gekennzeichnet, dass**
das Vierwege-Schaltventil auch einen hohlen zylindrischen Körper (1) umfasst, in welchem das erste Dreiwege-Schaltventil, das zweite Dreiwege-Schaltventil und der Kolben (18) in dieser Sequenz koaxial angeordnet sind; und
ein Dreiwege-Magnetventil (19) vorgesehen ist zum wahlweisen Strömungsverbinden einer an einer Seite des Kolbens (18) entgegengesetzt zu einer Seite davon, an der das erste Dreiwege-Schaltventil angeordnet ist, vorgesehenen Druckkammer, mit dem ersten Anschluss (A) oder dem vierten Anschluss, um dadurch zu bewirken, dass die ersten und zweiten Dreiwege-Schaltventile in einer ersten Richtung betätigt werden, in der sich der Kolben (18) bewegt zum Schalten des Vierwege-Schaltventils zu dem ersten Status, sobald die Druckkammer mit dem ersten Anschluss (A) strömungsverbunden ist,
und Führungen (5', 6', 7', 8') vorgesehen sind, deren jede an der Treibstange (2) fixiert sind und die axial nach außen vorstehen von axial entgegengesetzten Sitzflächen der jeweiligen Ventilelemente (60, 61), um eingesetzt zu werden in die jeweilige Ventilöffnung zum Verschließen der Ventilöffnung, ehe das Ventilelement (60, 61) aufgesetzt wird,
nachgiebige Dichtglieder (62 - 65) an Sitzflächenabschnitten angeordnet sind, mit denen die Ventilelemente aufgesetzt werden, und
das zweite Dreiwege-Schaltventil konfiguriert ist mit einer größeren Druckaufnahmefläche als eine Druckaufnahmefläche des ersten Dreiwege-Schaltventils, wodurch der Kolben (18) betätigt wird in einer zweiten Richtung entgegengesetzt zu einer ersten Richtung durch eine Treibkraft generiert als Folge einer Differenz der Druckaufnahmeflächen, sobald das Dreiwege-Magnetventil (19) veranlasst, dass die Druckkammer mit dem vierten Anschluss (D) strömungsverbunden ist, um dadurch die ersten und zweiten Dreiwege-Schaltventile zu dem zweiten Status zu schalten.

14. Vierwege-Schaltventil gemäß Anspruch 13, in welchem die Ventilelemente (60, 61) und die Führungen (5' - 8') der ersten und zweiten Dreiwege-Schaltventile miteinander integral geformt sind als Stopfen, die an der Außenseite der hohlen Treibstange (2) angeordnet sind.

15. Vierwege-Schaltventil gemäß Anspruch 1 oder 13, in welchem der hohle zylindrische Körper (1), der die ersten und zweiten Dreiwege-Schaltventile enthält, eine Doppelstruktur besitzt, in welcher ein innerer Teil davon durch einen Harzkörper (30) und ein äußerer Teil davon durch einen Metallkörper (31) geformt wird.

16. Vierwege-Schaltventil gemäß Anspruch 1 oder 13, in welchem der die ersten und zweiten Dreiwege-Schaltventile enthaltende hohle zylindrische Körper (1) einen die Dicke reduzierenden Abschnitt (57) aufweist, der angeordnet ist zwischen einer Niederdruckpassage und einer Hochdruckpassage, um die Wärmeübertragung dazwischen zu unterdrücken.

17. Vierwege-Schaltventil, insbesondere für ein Heiz- und Kühlsystem für ein automobiles Fahrzeug, zum wahlweisen Umschalten zwischen einem ersten und einem zweiten Status unter Verbinden entweder erster und zweiter Anschlüsse (A, B) und dritter und vierter Anschlüsse (C, D) oder der ersten und dritten Anschlüsse (A, C) und der zweiten und vierten Anschlüsse (B, D), wobei das Ventil einen Körper (1 ) aufweist, ferner Strömungspassagen, Ventilelemente und Ventilsitze im Inneren des Körpers und zumindest ein Magnetventil zum Umschalten des Vierwege-Schaltventils
**dadurch gekennzeichnet, dass**
eine hohle oder eine massive Treibstange (2, 55, 75) in einer im Wesentlichen zylindrischen Kammer des Körpers (1) axial beweglich geführt wird durch mehrere an der Peripherie der Treibstange (2, 55, 75) angebrachte, hülsenförmige Führungen (5, 6, 7, 8, 5', 6', 7', 8'), und durch mehrere zylindrische Führungsflächen von Ventilöffnungen des Körpers (1),
die Treibstange zwischen jeweils zweien der Führungen zwei separate Ventilelemente (3, 4, 60, 61) von ersten und zweiten koaxialen Dreiwege-Schaltventilen trägt,
die Ventilelemente zumindest durch eine axiale Bewegung der Treibstange axial verstellbar sind zum Aufsetzen auf oder zum Abheben von jeweils zugeordneten Ventilsitzen der Ventilöffnungen des Körpers (1), und
in welchem die Treibstange (2, 55, 75) axial bewegbar ist durch zumindest einen Kolben (18, 50), der in der zylindrischen Kammer des Körpers (1) koaxial beweglich angeordnet ist, wobei die Druckbeaufschlagung des Kolbens (18, 50) gesteuert wird durch zumindest ein Dreiwege-Magnetventil (19, 51), das an einem axial äußeren Ende des Körpers (1) vorgesehen ist.

## Revendications

1. Soupape de commutation à quatre voies pour une commutation entre un premier état dans lequel un fluide introduit dans un premier port (A) est conduit vers un second port (B) et le fluide introduit dans un troisième port (C) est conduit vers un quatrième port (D), et un second état dans lequel le fluide introduit dans le premier port (A) est conduit vers le troisième port (C) et le fluide introduit dans le second port (B) est conduit vers le quatrième port (D),
la soupape de commutation à quatre voies comprenant :
une première soupape de commutation à trois voies pouvant être commutée afin de relier le second port (B) au premier port (A) ou au quatrième port (D) ;
une seconde soupape de commutation à trois voies pouvant être commutée en même temps que la première soupape de commutation à trois voies afin de relier le troisième port (C) au quatrième port (D) ou au premier port (A) ; et
un piston (18) pour actionner simultanément un élément de soupape (3) de la première soupape de commutation à trois voies et un élément de soupape (4) de la seconde soupape de commutation à trois voies,
la première soupape de commutation à trois voies, la seconde soupape de commutation à trois voies et le piston (18) étant coaxialement agencés dans un corps cylindrique creux (1),
**caractérisée en ce que**,
les premier et second éléments de soupape de commutation à trois voies (3, 4) sont axialement agencés de manière coulissante sur une tige d'entraînement axiale (2, 55, 75) pour ouvrir et fermer les trous de soupape des sièges de soupape du corps (1) formés aux ouvertures des passages qui sont agencés axialement des deux côtés de l'élément de soupape respectif et qui communiquent avec le premier et le quatrième ports (A, D),
des guides (5, 6, 7, 8) sont fixés sur la tige d'entraînement (2, 55) et se projettent axialement à l'extérieur des surfaces de portée axialement opposées de l'élément de soupape (3, 4) afin d'être insérés dans le trou de soupape respectif de manière à fermer le trou de soupape avant que l'élément de soupape (3, 4) ne soit en appui, et, en même temps, afin de limiter une gamme de déplacement axial de l'élément de soupape respectif (3, 4) sur la tige d'entraînement, et **en ce que**
un ressort (9, 10) appuie sur les éléments de soupape (3, 4) dans une direction telle que l'élément de soupape respectif (3, 4) est amené en appui sur l'un (5, 8) des guides (5, 6, 7, 8) agencés vers l'extérieur de manière axiale.

2. Soupape de commutation à quatre voies selon la revendication 1, dans laquelle un espace à haute pression communiquant avec le premier port (A) est agencé entre la première et la seconde soupapes de commutation à trois voies, dans laquelle un espace à basse pression communiquant avec le quatrième port (D) est agencé sur un côté axialement extérieur de la tige d'entraînement (2, 55), et dans laquelle les espaces logeant les éléments de soupape (3, 4) des soupapes de commutation à trois voies communiquent avec le second port (B) et le troisième port (C), respectivement.

3. Soupape de commutation à quatre voies selon la revendication 2, dans laquelle la tige d'entraînement (2) est formée par un manchon cylindrique creux afin de relier les espaces agencés sur les côtés axialement extérieurs du manchon avec le quatrième port (D).

4. Soupape de commutation à quatre voies selon la revendication 2, dans laquelle les espaces agencés sur les côtés axialement extérieurs de la tige d'entraînement (2) communiquent les uns avec les autres par un tube ou par un passage formé dans le corps (1) afin de relier les espaces avec le quatrième port (D).

5. Soupape de commutation à quatre voies selon la revendication 2, dans laquelle une soupape à solénoïde à trois voies (19) pour relier sélectivement une chambre de pression sur un côté du piston (18) opposé au côté du piston (18) sur lequel les première et seconde soupapes de commutation à trois voies sont agencées, avec le premier port (A) ou le quatrième port (D), lorsque la chambre de pression communique avec le premier port (A), provoque le fait que la première et la seconde soupapes de commutation à trois voies sont actionnées dans une première direction dans laquelle le piston (18) se déplace afin de commuter la soupape de commutation à quatre voies dans le premier état.

6. Soupape de commutation à quatre voies selon la revendication 5, dans laquelle l'une de la première et de la seconde soupape de commutation à trois voies agencées près du piston (18) est configurée pour avoir une plus grande zone de réception de pression que la zone de réception de pression de l'autre, moyennant quoi, lorsque la soupape à solénoïde à trois voies relie la chambre de pression au quatrième port (D), le piston (18) est actionné dans une seconde direction opposée à la première direction par une force d'entraînement générée en raison de la différence de zone de réception de pression, commutant ainsi les première et seconde soupapes de commutation à trois voies dans le second état.

7. Soupape de commutation à quatre voies selon la revendication 5, dans laquelle un ressort (35) est prévu pour actionner la première soupape de commutation à trois voies, la seconde soupape de commutation à trois voies, et le piston (18) dans une seconde direction opposée à la première direction, afin de commuter ainsi la première et la seconde soupapes de commutation à trois voies dans le second état, lorsque la soupape à solénoïde à trois voies (19) relie la chambre de pression au quatrième port (D).

8. Soupape de commutation à quatre voies selon la revendication 2, dans laquelle la première et la seconde chambres de pression sont prévues sur les deux côtés axiaux du piston (18), et dans laquelle la soupape à solénoïde à trois voies (19) est prévue pour faire communiquer sélectivement le premier port (A) avec la première chambre de pression ou la seconde chambre de pression afin d'introduire sélectivement le fluide introduit dans le premier port (A) dans la première chambre de pression ou la seconde chambre de pression, moyennant quoi le piston (18) commute axialement les soupapes de commutation à trois voies dans le premier ou le second état.

9. Soupape de commutation à quatre voies selon la revendication 8, dans laquelle le piston (18) comprend une première soupape d'ouverture/de fermeture (44) pour ouvrir et fermer un premier orifice prévu entre la première chambre de pression et un passage à basse pression communiquant avec le quatrième port, et une seconde soupape d'ouverture/de fermeture (45) pour ouvrir et fermer un second orifice prévu entre la seconde chambre de pression et le passage à basse pression, et dans laquelle les première et seconde soupapes d'ouverture/de fermeture (44, 45) sont agencées de telle sorte que la première soupape d'ouverture/de fermeture se ferme lorsque la pression dans la première chambre de pression est élevée, et que la seconde soupape d'ouverture/de fermeture s'ouvre de manière synchronisée avec la fermeture de la première soupape d'ouverture/de fermeture, et que la seconde soupape d'ouverture/de fermeture se ferme lorsque la pression dans la seconde chambre de pression est élevée et que la première soupape d'ouverture/de fermeture s'ouvre de manière synchronisée avec la fermeture de la seconde soupape d'ouverture/de fermeture.

10. Soupape de commutation à quatre voies selon la revendication 8, dans laquelle le piston (18) possède un premier orifice prévu entre la première chambre de pression et un passage à basse pression communiquant avec le quatrième port (D), et un second orifice prévu dans un élément (40) séparant la seconde chambre de pression et le passage à basse pression l'un de l'autre.

11. Soupape de commutation à quatre voies selon la revendication 5, dans laquelle un second piston (50) est agencé sur un côté de la première et de la seconde soupapes de commutation à trois voies opposé à un côté sur lequel le piston (18) est agencé, pour actionner la première et la seconde soupapes de commutation à trois voies dans une seconde direction opposée à la première direction, et
dans laquelle une seconde soupape à solénoïde à trois voies (51) est prévue pour communiquer sélectivement avec une seconde chambre de pression agencée sur un côté du second piston (50) opposé à un côté de celui-ci sur lequel la première et la seconde soupapes de commutation à trois voies sont agencées, avec le premier port (A) ou le quatrième port (D), moyennant quoi, lorsque la seconde chambre de pression communique avec le premier port (A), le second piston (50) actionne la première et la seconde soupapes de commutation à trois voies dans la seconde direction afin de commuter la soupape de commutation à quatre voies dans le second état.

12. Soupape de commutation à quatre voies selon la revendication 1, dans laquelle la première et la seconde soupapes de commutation à trois voies possèdent des éléments d'étanchéité (62-65 ; 77, 78, 79) agencés à des parties auxquelles les éléments de soupape (3, 4 ; 60, 61) sont situés, d'une manière interposée.

13. Soupape de commutation à quatre voies pour une commutation entre un premier état dans lequel un fluide introduit dans un premier port (A) est conduit vers un second port (B) et le fluide introduit dans un troisième port (C) est conduit vers un quatrième port (D), et un second état dans lequel le fluide introduit dans le premier port (A) est conduit vers le troisième port (C) et le fluide introduit dans le second port (B) est conduit vers le quatrième port (D),
la soupape de commutation à quatre voies comprenant :
une première soupape de commutation à trois voies pouvant être commutée pour relier le second port (B) au premier port (A) ou au quatrième port (D) ;
une seconde soupape de commutation à trois voies pouvant être commutée à l'unisson avec la première soupape de commutation à trois voies afin de relier le troisième port (C) au quatrième port (D) ou au premier port (A) ;
un piston (18) pour actionner simultanément un élément de soupape (60) de la première soupape de commutation à trois voies et un élément de soupape (61) de la seconde soupape de commutation à trois voies ;
un corps cylindrique creux (1) possédant la première soupape de commutation à trois voies, la seconde soupape de commutation à trois voies, et le piston (18) coaxialement agencé à l'intérieur dans cet ordre ; et
une soupape à solénoïde à trois voies (19) pour communiquer sélectivement avec une chambre de pression agencée sur un côté du piston (18) opposé à un côté de celui-ci sur lequel la première soupape de commutation à trois voies est agencée, avec le premier port (A) ou le quatrième port (D), moyennant quoi, lorsque la chambre de pression communique avec le premier port (A), la première et la seconde soupapes de commutation à trois voies sont actionnées dans une première direction dans laquelle le piston (18) se déplace afin de commuter la soupape de commutation à trois voies dans le premier état,
**caractérisée en ce que** la soupape à quatre voies comprend également :
une première et une seconde soupapes de commutation à trois voies comprenant chacune un élément de soupape (60, 61) fixé sur une tige d'entraînement axialement déplaçable (2), pour ouvrir et fermer les trous de soupape formés aux ouvertures des passages qui sont agencés axialement sur les deux côtés de l'élément de soupape respectif (60, 61) et qui communiquent avec le premier port (A) et le quatrième port (D),
et **en ce que** les guides (5', 6', 7', 8') sont chacun fixés sur la tige d'entraînement (2) et se projettent axialement à l'extérieur des surfaces de portée axialement opposées de l'élément de soupape respectif (60, 61) pour être insérés dans le trou de soupape respectif afin de fermer le trou de soupape avant que l'élément de soupape (60, 61) ne soit en appui, et **en ce que** des éléments d'étanchéité (62-65) sont agencés sur les parties de surface de portée sur lesquelles les éléments de soupape sont placés, et
**en ce que** la seconde soupape de commutation à trois voies est configurée pour avoir une plus grande zone de réception de pression qu'une zone de réception de pression de la première soupape de commutation à trois voies, moyennant quoi, lorsque la soupape solénoide à trois voies (79) provoque la communication de la chambre de pression avec le quatrième port (D), le piston (18) est actionné dans une seconde direction opposée à la première direction par une force d'entraînement générée en raison de la différence de zone de réception de pression, commutant ainsi la première et la seconde soupapes de commutation à trois voies dans le second état.

14. Soupape de commutation à quatre voies selon la revendication 13, dans laquelle les éléments de soupape (60, 61) et les guides (5'-8') de la première et de la seconde soupapes de commutation à trois voies sont intégralement formés les uns avec les autres en tant que bouchons fixés sur l'extérieur de la tige d'entraînement creuse (2).

15. Soupape de commutation à quatre voies selon la revendication 1 ou 13, dans laquelle le corps cylindrique creux (1) logeant la première et la seconde soupapes de commutation à trois voies possède une structure double dans laquelle une partie intérieure de celle-ci est formée par un corps en résine (30) et une partie extérieure de celle-ci est formée par un corps métallique (31).

16. Soupape de commutation à quatre voies selon la revendication 1 ou 13, dans laquelle le corps cylindrique creux (1) logeant la première et la seconde soupapes de commutation à trois voies possède une partie à épaisseur réduite (57) prévue entre un passage à basse pression et un passage à pression élevée afin d'éliminer ainsi la conduction de chaleur entre ceux-ci.

17. Soupape de commutation à quatre voies, en particulier pour un système de chauffage et de refroidissement pour véhicule automobile, pour passer sélectivement d'un premier à un second état en reliant le premier et le second ports (A, B) et le troisième et le quatrième ports (C, D), ou le premier et le troisième ports (A, C) et le second et le quatrième ports (B, D), la soupape comprenant un corps (1), des passages d'écoulement, des éléments de soupape, et des sièges de soupape dans le corps, et au moins une soupape solénoïde pour commuter la soupape de commutation à quatre voies,
**caractérisée en ce que**,
dans une chambre sensiblement cylindrique du corps (1), une tige d'entraînement creuse ou solide (2, 55, 75) est axialement guidée de manière mobile par plusieurs guides en forme de manchons (5, 6, 7, 8, 5', 6', 7', 8') fixés sur la périphérie de la tige d'entraînement (2, 55, 75) et par plusieurs surfaces de guidage cylindriques des trous de soupape du corps (1),
la tige d'entraînement porte, entre deux guides respectifs, deux éléments de soupape séparés (3, 4, 60, 61) de la première et de la seconde soupapes de commutation à trois voies coaxiales,
les éléments de soupape sont axialement ajustables au moins par le mouvement axial de la tige d'entraînement afin d'être en appui sur ou écartés des sièges de soupape respectifs associés des trous de soupape du corps (1), et
dans laquelle la tige d'entraînement (2, 55, 75) est axialement déplaçable par au moins un piston (18, 50) agencé coaxialement de manière mobile dans la chambre cylindrique du corps (1), l'actionnement par pression du piston (18, 50) étant contrôlé par au moins une soupape à solénoïde à trois voies (19, 51) située à une extrémité extérieure axiale du corps (1).
